# EUROPEAN PATENT APPLICATION

(11) **EP 2 048 829 A1**
(43) Date of publication of application: **15.04.2009**
(21) Application number: 07291193.6
(22) Date of filing: 01.10.2007
(51) Int. Cl.: H04L 12/56

(54) **Beacon and mobile terminal synchronization and method thereof**

(71) Applicant: Alcatel Lucent, 75008 Paris (FR)
(72) Inventor: Hofmann, Dirk, Dr., 74321 Bietigheim-Bissingen (DE); Buné, Paul A.M., Dipl.-Ing., 70806 Kornwestheim (DE)
(74) Representative: Richardt, Markus Albert

(57) **Abstract**

The invention relates to a method of optimizing measurement duration in a telecommunications network, said telecommunications network comprising a first base station connected to a first radio network, at least a second base station connected to a second radio network, a core network connected to said first and second radio network, a database coupled to said core network, said method comprising: sending a first beacon period information belonging to said first base station from said first base station to said database; sending at least a second beacon period information belonging to said second base station from said second base station to said database; storing at least said first and second beacon period information on said database; sending a request of said second beacon period information from said first base station to said database; generating a response of said second beacon period information belonging to said second base station from said database to said first base station; forwarding said response of said first base station to said mobile terminal; adjusting measurement periods on the mobile terminal based on said response of said beacon period information.

## Description

### Technical field

The invention relates to a method of optimizing measurement duration in a telecommunications network, to a mobile terminal, to a base station and to a database.

### Background and related art

In telecommunication networks such as GSM/UMTS and WiMax the beacon signals are used for supervisory, control, synchronization or reference purposes. For example, when a mobile device requires a connection with a candidate base station or radio access technology, the beacon signal of the candidate is measured to obtain all required information regarding connection establishment and synchronization. While the mobile terminal is communicating with a base station, the mobile terminal or the base station defines measurement periods for trying to intercept the beacon signals and synchronize with the candidate base station. On a parallel action, the candidate base stations send the beacon signals on specific periods of time and duration.

If the period used by the mobile terminal to initiate the measurements is not aligned with the beacon periods that the candidate base station sends to, it may take several beacon periods until the measurement period fits to the beacon period and the required measurements can be performed by the mobile terminal. As a consequence, a complete measurement execution can take up to some seconds. In the case of an abrupt signal degradation of the active radio link, such a long measurement time could for example hamper seamless or lossless intersystem handover.

Therefore a method of optimizing the mobile terminal measurement time, an improved mobile terminal, an improved base station, and database is described in the following that is adapted for performing the method in accordance with the invention.

### Summary of the invention

The present invention provides a method of optimizing measurement duration in a telecommunications network, the telecommunications network comprising a first base station connected to a first radio network, at least a second base station connected to a second radio network, a core network connected to the first and second radio network, a database coupled to the core network, the method comprising: sending a first beacon period information belonging to the first base station from the first base station to the database; sending at least a second beacon period information belonging to the second base station from the second base station to the database; storing at least the first and second beacon period information on the database; sending a request of the second beacon period information from the first base station to the database; generating a response of the second beacon period information belonging to the second base station from the database to the first base station; forwarding the response of the first base station to the mobile terminal; adjusting measurement periods on the mobile terminal based on the response of the beacon period information.

The method has the advantage that when the mobile terminal receives the beacon period information, it will know the time when the next beacon will be sent by the second base station. In that manner, the mobile terminal is able to adjust its measurement periods so that they can start at the same time as the second base station sends the beacon signals. As a consequence, the mobile terminal requires a minimum amount of time to complete the measurements of the second base station in order to for example share the load of a service with the second base station or initiate a handover to the second base station with a better signal strength.

In accordance with an embodiment of the invention, the request of the second beacon period information is originated on the mobile terminal.

One of the advantages of the invention is that in the case of dual-radio mobile terminals, which can measure the beacons of the second base station with a second radio interface independently of communication with the first radio interface, the beacon period information will be primarily requested by the mobile terminal itself. Alternatively, in the case of single-radio mobile terminals, the measurement of the beacons of the second base station must be executed with the same radio interface, which is being used for communication with the first base station, the beacon period information will be primarily requested by the first base station and this information is used in the following by the first base station to schedule measurement periods as for example in compressed mode for the mobile terminal.

In accordance with an embodiment of the invention, the request of the second beacon period information is originated from a measurement trigger in the base station.

In accordance with an embodiment of the invention, the request of the second beacon period information is originated from a measurement trigger in the mobile terminal.

In accordance with an embodiment of the invention, the first base station, the second base station and the database are connected to at least a satellite/ground based timing module for generating a time reference and wherein the method further comprises: synchronizing in time the first base station, the second base station and the database to the time reference using the satellite/ground based timing module; generating a scheduled measurement period for the mobile terminal by the first base station using the time reference and the second beacon period information; sending the scheduled measurement period for the mobile terminal to the mobile terminal from the first base station.

An advantage of the invention is that it does not require the base stations to be synchronized actively, i.e. their current beacon time is only measured in reference to the time reference and not changed for synchronization. Another advantage of the invention is that when connecting the base stations and the database to a timing module that generates a common time reference, it allows a direct sharing of the beacon period information and storing of the information into the database, without the need for regular system time reports and for absolute time or offset time calculations. When requested by the mobile terminal or the base station, the base station that is communicating with the mobile terminal can make a request to the database to obtain this beacon period information and use it directly for generating the scheduled measurement period to the mobile terminal or for simply forwarding or tunneling this beacon period information to the mobile terminal.

In accordance with an embodiment of the invention, the database further comprises a first predefined transmission delay from a first base station to the database and a second predefined transmission delay from a second base station to the database. The database is connected to satellite ground based timing module for generating a time reference. The method further comprises: reporting at regular intervals a first base station system time to the database from the first base station; reporting at regular intervals a second base station system time to the database from the second base station. The method further comprises: converting the first and the second base station system time to the first and second absolute time; using the time reference and the predefined transmission delay by the database; generating a schedule measurement period for the mobile terminal by the first base station at regular intervals; and sending the schedule measurement period for the mobile terminal to the mobile terminal from the first base station.

The method has the advantage that it is still possible to accomplish the optimization of the beacon measurement procedure to the second base station, without adding the timing module apparatus to the base stations. When the database is connected to a timing module, the first base station and the second base station regularly send intervals of information with the system time to the database so that the database can convert the data using the predefined transmission delay to the time reference provided by the timing module.

In accordance with an embodiment of the invention, the first base station, the second base station, the mobile terminal and the database are coupled to at least a satellite or ground based timing module for generating a time reference. The method further comprises synchronizing in time the first base station, the second base station, the database and the mobile terminal to the time reference using the satellite or ground based timing module.

This embodiment of the invention has the advantage that all the elements of the telecommunications network will have the same time reference, allowing to share all the beacon period information from the base stations without, for example, further time offset time or absolute time calculation. The mobile terminals are able to receive the beacon period information and use it as input for adjusting the measurement periods.

In accordance with an embodiment of the invention, the first and the second radio networks use different radio technologies. The method has the advantage that the first and the second base stations do not necessarily need to be in the same radio network, but that they can belong to different radio access technologies. This allows flexibility in sharing the beacon period information also between different technologies as they will be connected to the same core network.

In accordance with another embodiment of the invention the first and second radio networks are identical. This method has the advantage that both base stations may be connected to the same radio network, using the same radio access technology and sharing all the beacon period information. This information is used to make the response when the mobile terminal requires the beacon periods information for adjusting the measurement period and improving the measurement times.

In another aspect, the invention relates to a mobile terminal that comprises means for requesting a second beacon period information belonging to at least a second base station from a first base station; means for receiving a response with the second beacon period information belonging to at least the second base station from the first base station; and means for adjusting measurement periods on the mobile terminal based on the second beacon period information.

In accordance with an embodiment of the invention, the mobile terminal comprises further means for receiving schedule measurement periods for adjusting measurement period being generated by the first base station.

In another aspect, the invention relates to a base station that comprises means for sending a first beacon period information belonging to a first base station to a database, means for forwarding the request of the second beacon period information to the database, and means for forwarding a response of the beacon period information belonging to the second base station from the database to the mobile terminal.

In accordance with an embodiment of the invention, the base station further comprises: means for receiving a request from a mobile terminal of a second beacon period information belonging to a second base station; means for reporting at regular intervals a first base station system time to the database, means for generating a schedule measurement period for the mobile terminal using a second absolute time and the second beacon period information, and means for sending the schedule measurement period to the mobile terminal.

In another aspect, the invention relates to a database that comprises means for receiving a first beacon period information belonging to a first base station from at least a first base station; means for storing the first beacon period information from at least the first base station; means for receiving at least a second beacon period information belonging to a second base station from the second base station; means for storing the second beacon period information from at least the second base station; means for receiving a request of at least the second beacon period information from the first base station; means for generating a response of at least the second beacon period information if requested by the first base station; and means for sending the response of at least the second beacon period information to the first base station.

In accordance with an embodiment of the invention, the database is coupled to satellite or ground based timing module for generating a time reference, and connected to a core network. The database further comprises a first predefined transmission delay from a first base station to the database, and a second predefined transmission delay from the second base station to the database, the database further comprises means for receiving reports at regular intervals from a first base station system time, means for receiving reports at regular intervals from a second base station system time, means for converting the first and second base station system time to a first and second absolute time, using the time reference and the first and second transmission delays.

### Brief description of the drawings

In the following preferred embodiments of the invention are described in greater detail by way of example only making reference to the drawings in which:
- Fig. 1: is a schematic of the prior art,
- Fig. 2: is a schematic of a synchronization method in accordance with an em- bodiment of the invention,
- Fig. 3: is a block diagram of a synchronization method in accordance with a first preferred embodiment of the invention,
- Fig. 4: is a block diagram of a further preferred embodiment of a synchronization method of the invention,
- Fig. 5: is a sequence of operation of a further preferred embodiment of the inven- tion,
- Fig. 6: is a block diagram of a further preferred embodiment of a synchronization method of the invention,
- Fig. 7: is a sequence of operation of a further preferred embodiment of a syn- chronization method of the invention,
- Fig. 8: is a block diagram of a further preferred embodiment of a synchronization method of the invention,
- Fig. 9: is a block diagram of a further preferred embodiment of a synchronization method of the invention,
- Fig. 10: is a sequence of operation of a further preferred embodiment of a syn- chronization method of the invention,
- Fig. 11: is a sequence of operation of a further preferred embodiment of a syn- chronization method of the invention,

### Detailed description

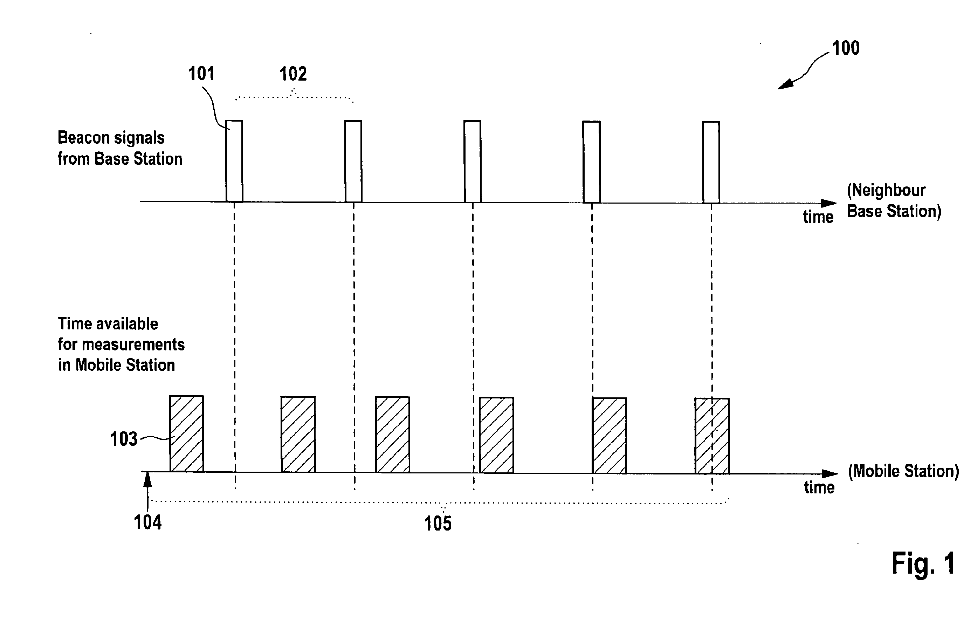

Fig. 1 shows a prior art representation of the beacons 101 using a beacon period 102 that are sent by a base station, and the time 103 available on a mobile terminal for measuring beacons 101. These two processes are executed in the telecommunication network in parallel and may be the result of a measurement trigger 104 and until the beacon period or the beacon time does not coincide with the time available for measurements in the mobile terminal, the mobile terminal will not be able to finish the measurement procedure 105. As fig. 1 shows, the mobile terminal may require up to six measurement periods in order to obtain the same time as when the beacon is sent by the base station.

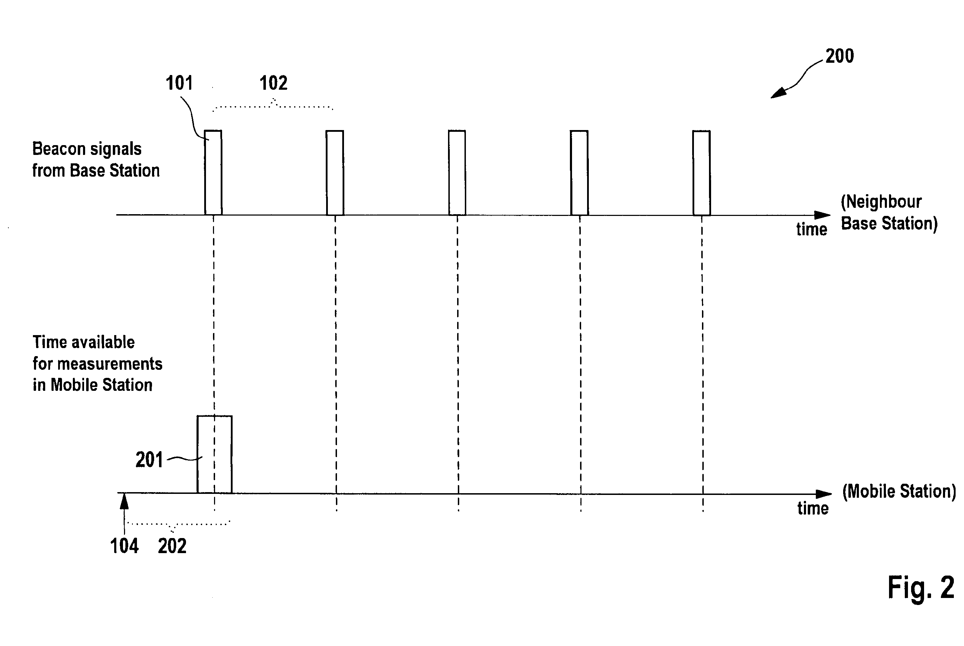

Fig. 2 shows in the upper part a diagram of the beacons 101 sent by a base station at regular intervals 102. When a mobile terminal requires to measure the beacon periods of a neighbor base station that may be a result of a measurement trigger 104, the mobile terminal will send a request to the current base station where it is communicating with, in order to receive the beacon period information of at least a neighbor station or this information is automatically received by neighborhood information provisioning. Once this beacon period information is received, the mobile terminal will adjust this period of the measurements or alternatively the base station will schedule adequate measurement periods in a compressed mode manner. In this case, the time available for measurements 201 has been corrected so that it correlates with the time when the neighbor base station sends the beacons 101. The duration of the measurement procedure 202 with adjusted measurement periods is much shorter than the duration 105 shown in fig. 1.

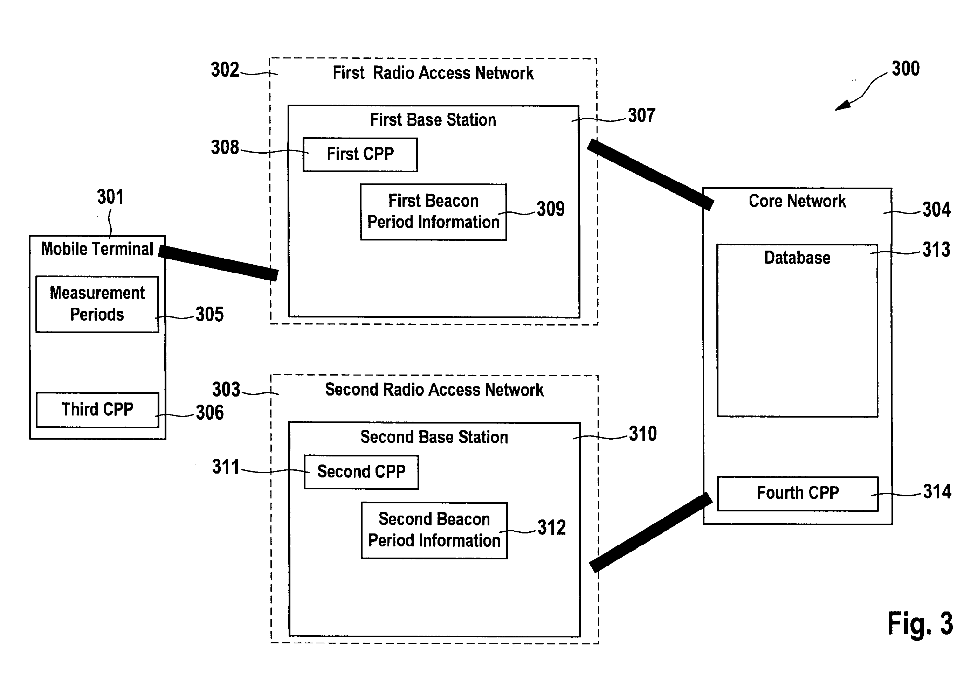

Fig. 3 shows a block diagram of a telecommunication network 300 that includes a mobile terminal 301, a first radio access network 302, a second radio access network 303 and a core network 304. The mobile terminal comprises measurement periods 305 and a third computer program product 306. The first radio access network 302 includes a first base station 307 that further comprises a first computer program product 308 and a first beacon period information 309. The second radio access network 303 further comprises: a second base station 310 that further comprises a second computer program product 311 and a second beacon period information 312. The core network 304 comprises a database 313 and a fourth computer program product 314.

The mobile terminal 301 establishes a communication using a first radio access network 302 and the first base station 307 as the access point to the network. Mobile terminal 301 completes regular measurements to neighbor base stations using measurement periods 305. The core network is connected to both first and second radio access networks 302 and 303. The first and the second base station 307, 310 send regular beacons to potential mobile terminals and all the related data to the beacon period information 309 and 312 to the database 313 in the core network 304. The database 313 stores at least this first beacon period information 309 and second beacon period information 312 and makes it available if requested by the mobile terminal 301 or the first and second base station 307, 310.

One of the advantages of the invention is that by allowing an adjustment of the measurements done by the mobile terminal, it optimizes the time that it requires to complete these measurements, and an abrupt signal degradation is avoided by quickly initiating a transmission with a second base station and second radio access network, or by facilitating inter or intra-system handover. It may occur for example that the beacon period sent by the base station and the periods between the time available for measurements in the mobile terminal are very similar, so that it could take up to some seconds in order for the mobile terminal to receive and start the measurement of the beacon periods.

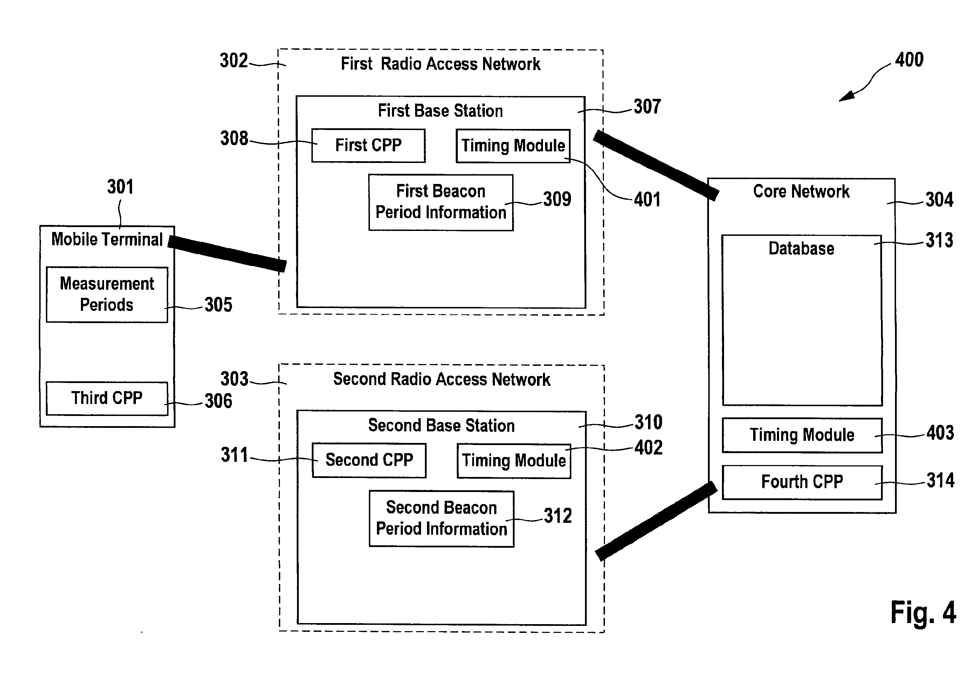

Fig. 4 shows a block diagram of the telecommunications network that includes a mobile terminal 301, a first and a second radio access network 302, 303 and a core network 304. The elements in the embodiment shown in fig. 4 that correspond to elements of the embodiment of fig. 3 have been designated by the same reference signals. The first base station 307 further comprises a timing module 401, the second base station 310 further comprises a timing module 402 and the core network 304 further comprises a timing module 403. The timing modules 401, 402, and 403 are used for generating common time reference between all the elements of the telecommunication network. These timing modules 401, 402, and 403 are based on any satellite or ground based system as for example the global positioning system, GPS.

This method has the advantage that when sending the first and second beacon period information 309 and 312, the core network shares the same time reference that the first and second base station uses to generate the beacon period information, so that it can store it and interpreting into the system. When the mobile terminal receives the second beacon period information 312, it will use this information to adjust the measurement period 305 without any need of time conversion or calculation.

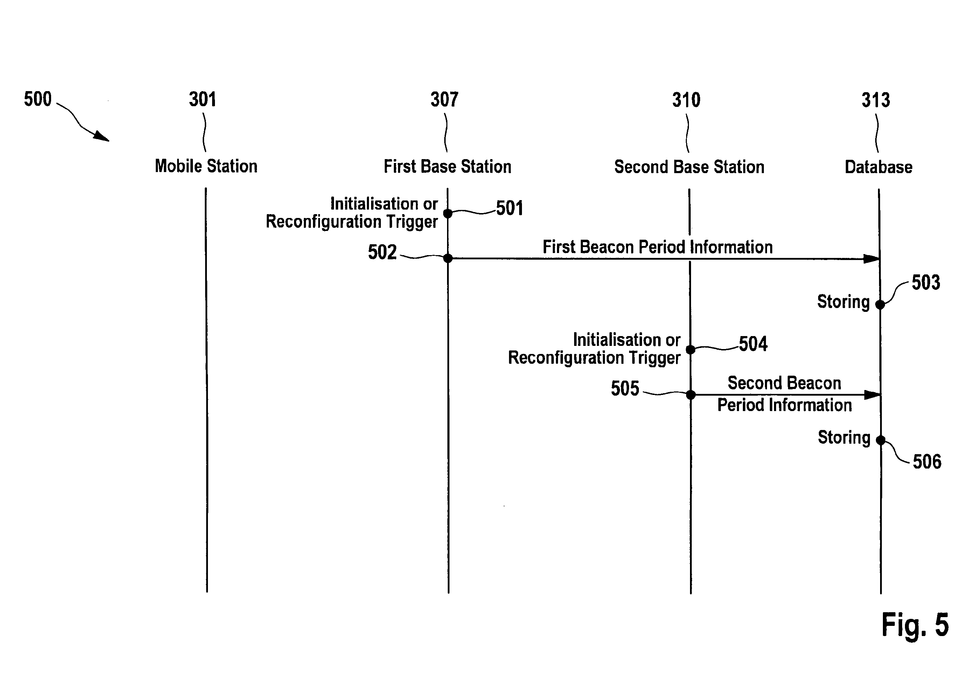

Fig. 5 shows a sequence of operation diagram. The sequence of operation diagram depicts the steps performed and the messages exchanged between the first base station, the second base station and the database. An initialisation or reconfiguration trigger 501 may start the sequence of operation in the base station. Then, the first base station sends the first beacon period information to the database 502. An initialisation or reconfiguration trigger 504 may start the sequence of operation in the second base station and a second beacon period information belonging to the second base station will be sent to the database 505. The database will then store the first and second beacon period information and make it available if requested by the mobile terminal or the base stations 503, 506.

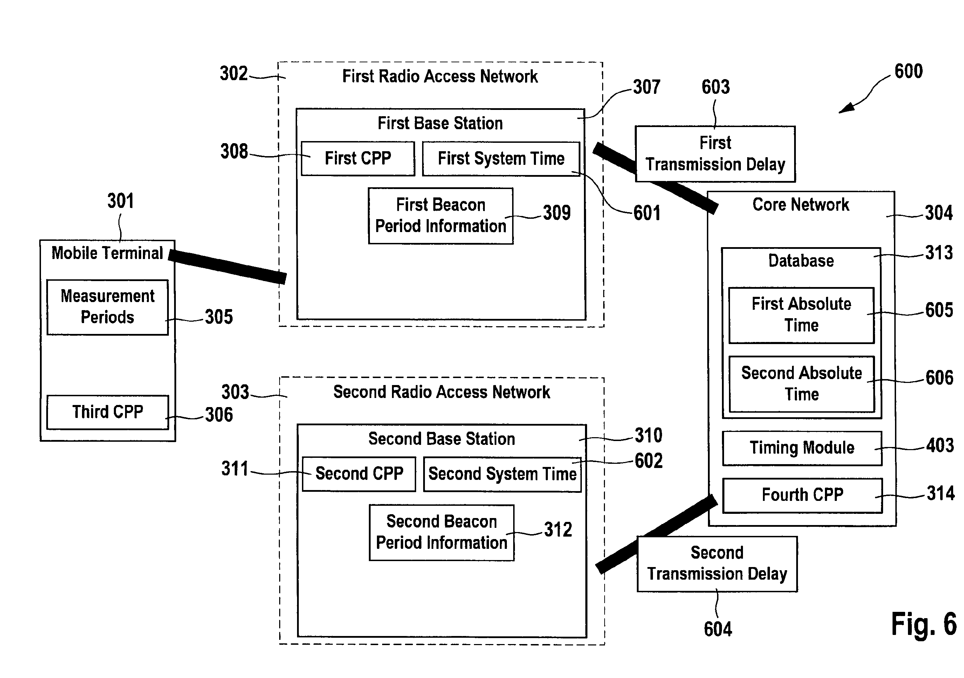

Fig. 6 shows a block diagram of the telecommunication network that includes a mobile terminal 301, a first and second radio access network 302, 303 and a core network 304. The elements in the embodiment shown in fig. 6 that correspond to elements of the embodiment of fig. 3 and fig. 4 have been designated by the same reference signals. The first base station 307 further comprises a first system time 601. The second base station 310 further comprises a second system time 602. The database 313 further comprises a first and a second absolute time 605 and 606. When the first and the second base station are connected to the core network 304, the first and the second base station will send at regular intervals the first and second system time 601, 602 to the database 313.

When the database 313 receives this first and second system time 601, 602 it will use a first and second transmission delay 603 and 604 and the timing module 403 in order to calculate a first and second absolute time 605 and 606. This first and second transmission delay 603, 604 are predefined in the database. The transmission delays may be for example manually introduced into the database, or may be measured by a measurement device in the core network. The first and the second system time 601, 602 may be sent to the core network 304 with a high priority so that the transmission delays of the first and second absolute times are accurate.

One of the advantages is that most of the components of the telecommunication network do not require a timing module in order to improve the measurement time of the mobile terminal. This allows using first and second base station without an absolute time reference and just sending regular updates of the internal system time in order to make the calculations that later will be used by the mobile terminal.

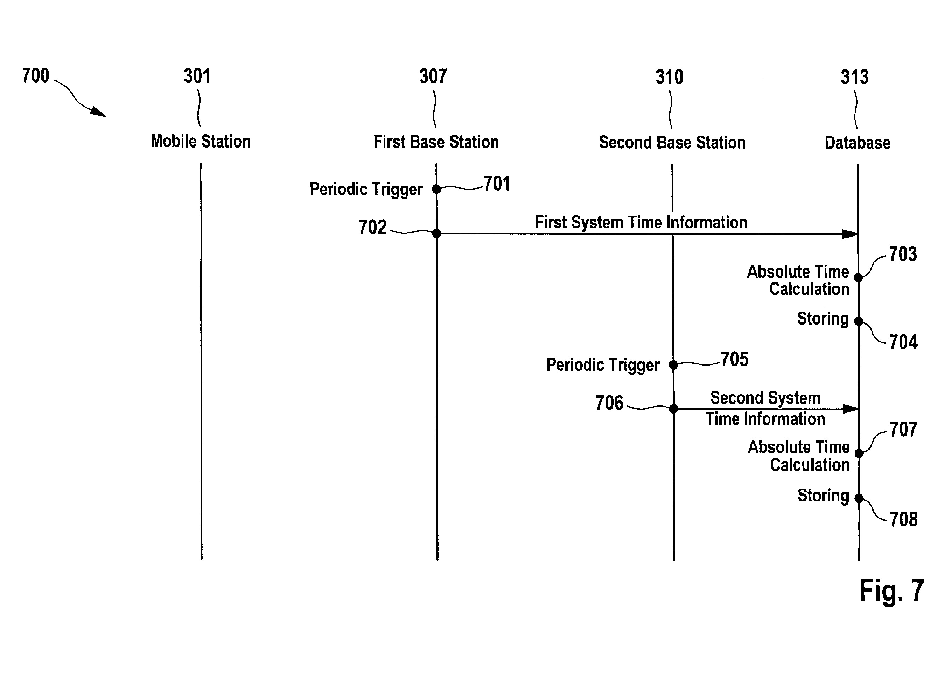

Fig. 7 shows a sequence of operation diagram. The sequence of operation diagram depicts the steps that are performed and the messages that are obtained between the first and second base station 307, 310 and the database 313. After a periodic trigger 701, the first base station reports the system time to the database 702. The database then converts the system time to a first absolute time using the time reference generated by the timing module 703. In the next step 704, the absolute time is stored in the database. Later or in parallel, the second base station reports after a periodic trigger 705 the second system time to the database 706. The database then converts the second base station system time in order to obtain the second absolute time 707. In the next step 708, the absolute time is stored in the database.

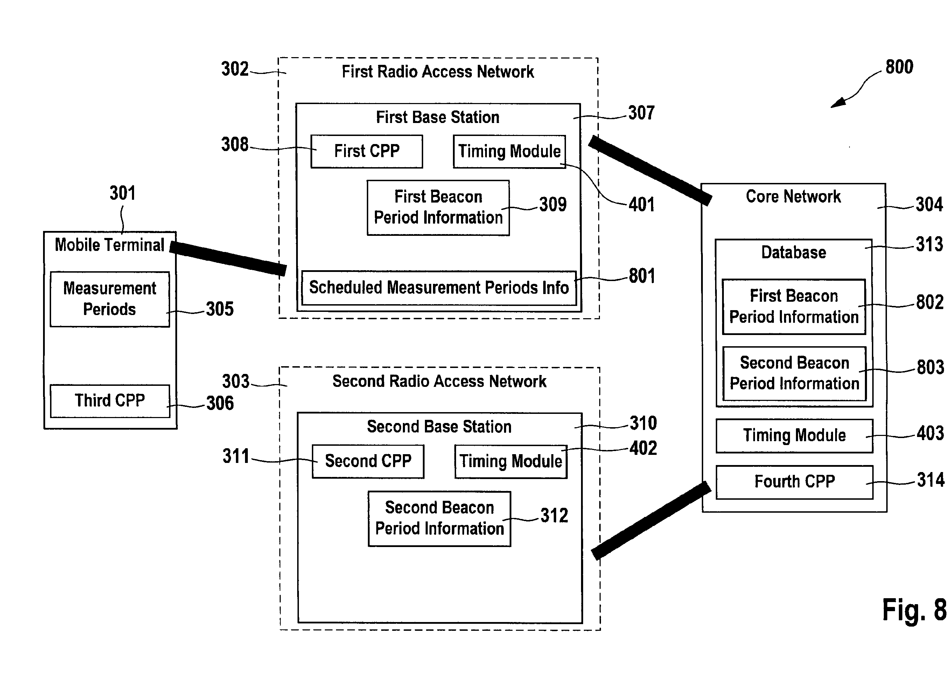

Fig. 8 shows a block diagram of the telecommunications network that comprises a mobile terminal 301, a first and second radio access network 302, 303 and a core network 304. The elements in the embodiment shown in fig. 6 that correspond to elements of the embodiment of fig. 3 and fig. 4 have been designated by the same reference signals. The first base station 307 further comprises the generation of the schedule measurement period 801 that is transmitted to the mobile terminal in order to adjust the measurement periods 305. The first and second beacon period information 802 and 803 have been previously stored in the database 313. The timing modules 401, 402, 403 are used for generating a time reference that allows a system time comparison between all these three elements, database 313 and first and second base station 307 and 310.

The first base station 307 may request the second beacon information 803 from the database 313. After its reception, the first base station 307 can generate a schedule measurement period 801 for the mobile terminal using the time reference generated by the timing module 401 and the second beacon period information 803 received from the database 313. This schedule measurement period 801 is then sent to the mobile terminal 301 that uses this information in order to adjust the measurement periods 305. The scheduled measurement periods 801 can for example be sent on regular intervals so that the mobile terminal 301 can in real time adjust the measurement periods according to the first base station.

Alternatively, the first base station 302 may send an extended schedule of the measurement periods and sending times, so that the mobile terminal 301 adjusts the required measurement periods and measurement times for a longer interval. In this case, the base station 302 may require using the transmission delay between the first base station and the mobile terminal so that it can correctly interpret the values sent by the first base station. This transmission delay may be measured and sent by the mobile terminal 301. Fig. 8 represents a mixed type of network elements where some components have a timing module and some of the components do not have any timing module.

The invention has the advantage that the mobile terminal does not require to have a timing module to synchronize the internal system time with the time of the rest of the components of the telecommunication network. This allows further adaptability of the type of mobile terminals that may use the optimization method of the measurement duration.

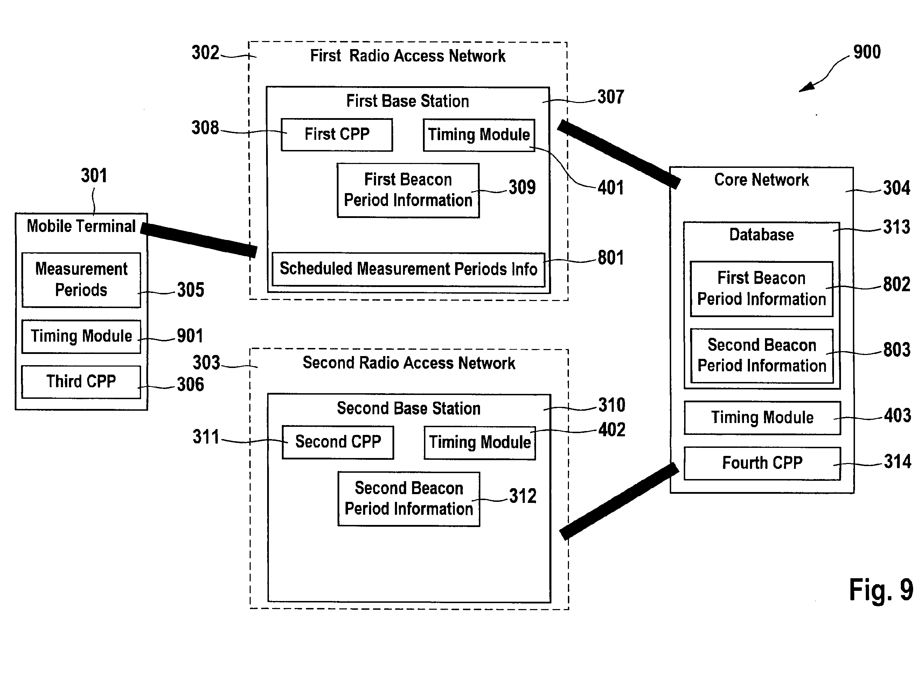

Fig. 9 shows a block diagram of the telecommunications network that comprises a mobile terminal 301, a first and second radio access network 302, 303 and a core network 304. The elements in the embodiment shown in fig. 9 that correspond to elements of the embodiment of fig. 3, fig. 4 and fig. 8 have been designated by the same reference signals. The mobile terminal 301 further comprises a timing module 901. The first and second beacon period information 802 and 803 have been previously stored in the database 313. The timing modules 901, 502, 503, 504 are used for generating a time reference that allows a system time comparison between all these four elements, mobile terminal 301, first and second base station 307 and 310, and database 313. In a further possibility, the mobile terminal may have a timing module and the first and second base stations do not have any timing module.

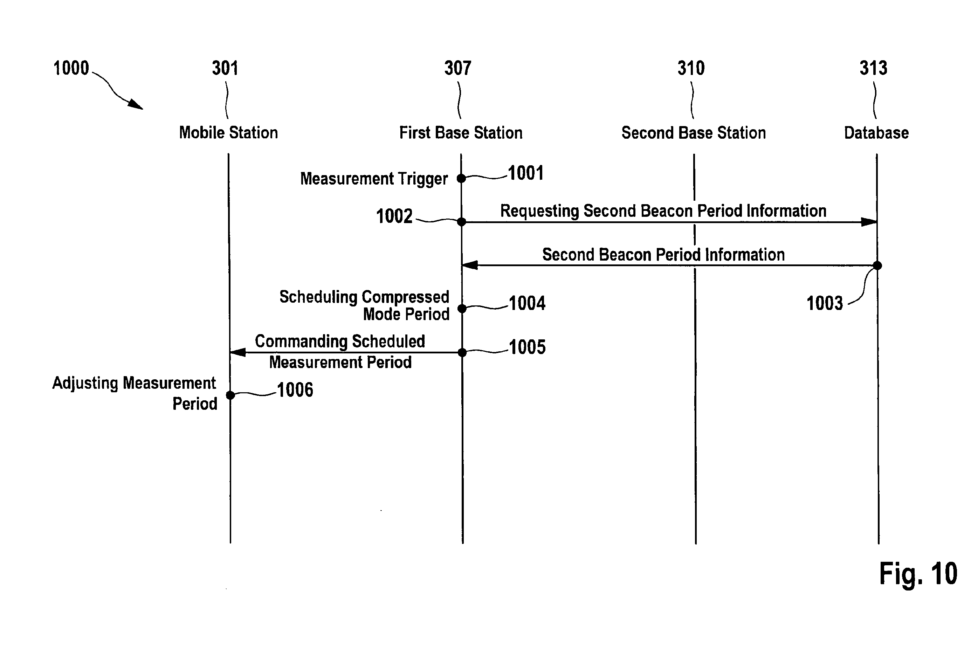

Fig. 10 shows a sequence of operation diagram. The sequence of operation diagram depicts the steps that are performed and the messages that are obtained between the mobile terminal 301, the first and second base station 307, 310 and the database 313. After a measurement trigger 1001 generated at the first base station 307, the first base station 307 sends a second beacon period information request to the database 313 in step 1002. Then, the database responds with the second beacon period information 1003. In the next step 1004, a scheduled measurement period is generated by the first base station 307, which includes all the information regarding the beacon period information that is transmitted by the database. The scheduled measurement period is then sent to the mobile terminal 1005, which uses this information in order to adjust the measurement periods 1006.

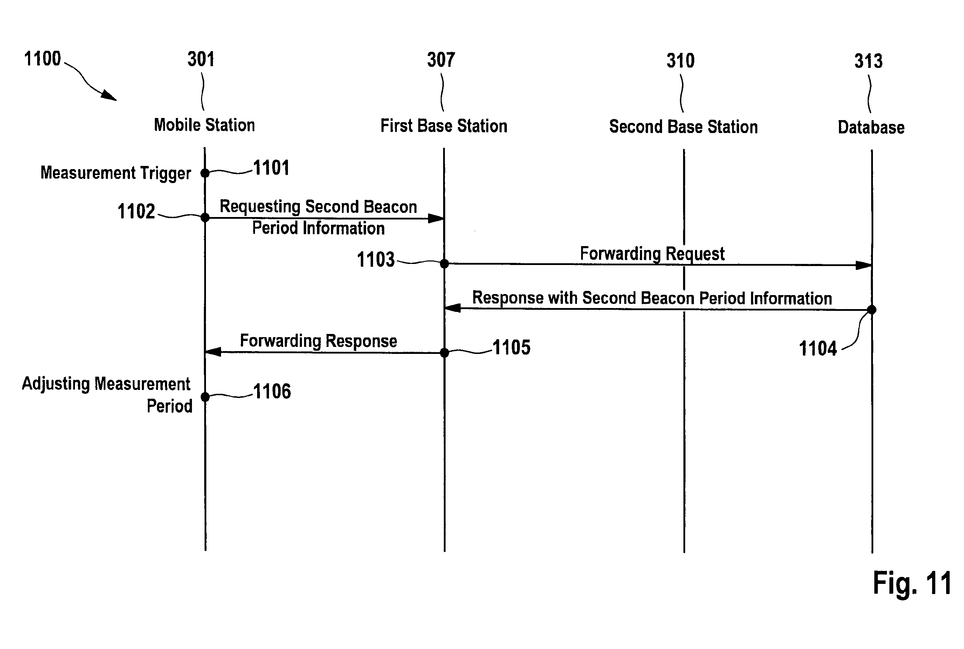

Fig. 11 shows a sequence of operation diagram. The sequence of operation diagram depicts the steps that are performed and the messages that are obtained between the mobile terminal 301, the first and second base station 307, 310 and the database 313. After a measurement trigger 1101 generated at the mobile terminal 301, the mobile terminal 301 initiates a request 1101 of the second beacon period information that is sent to the first base station 307. When the first base station 307 receives the request from the mobile terminal 301, it forwards the request to the database in step 1103. The database 313 generates a response 1104 with the second beacon period information and sends the data to the first base station 307, which will forward this information to the mobile terminal 301 in step 1105. When this second beacon period information 311 has been received by the mobile terminal 301, it adjusts the measurement periods 305 in step 1106 so that it corresponds to the beacon period transmission of the second base station 310, allowing a rapid initiation of the measurements.

### List of Reference Numerals

| | |
|---|---|
| 100 | Time Diagram |
| 101 | Time diagram from beacon periods |
| 102 | Beacon period |
| 103 | Time available for measurements |
| 104 | Measurement trigger |
| 105 | Duration of measurement procedure |
| 200 | Adjusted time diagram |
| 201 | Adjusted measurement period |
| 202 | Duration of adjusted measurement procedure |
| 300 | Block diagram |
| 301 | Mobile terminal |
| 302 | First radio access network |
| 303 | Second radio access network |
| 304 | Core network |
| 305 | Measurement periods |
| 306 | Third CPP |
| 307 | First base station |
| 308 | First CPP |
| 309 | First beacon period information |
| 310 | Second base station |
| 311 | Second CPP |
| 312 | Second beacon period information |
| 313 | Database |
| 314 | Fourth CPP |
| 400 | Block diagram |
| 401 | Timing module |
| 402 | Timing module |
| 403 | Timing module |
| 500 | Time diagram |
| 600 | Block diagram |
| 601 | First system time |
| 602 | Second system time |
| 603 | First transmission delay |
| 604 | Second transmission delay |
| 605 | First absolute time |
| 606 | Second absolute time |
| 700 | Time diagram |
| 800 | Block diagram |
| 801 | Scheduled measurement periods |
| 802 | First beacon period information |
| 803 | Second beacon period information |
| 900 | Block diagram |
| 901 | Timing module |
| 1000 | Time diagram |
| 1100 | Time diagram |

## Claims

1. A method of optimizing measurement duration in a telecommunications network, said telecommunications network comprising a first base station connected to a first radio network, at least a second base station connected to a second radio network, a core network connected to said first and second radio network, a database coupled to said core network, said method comprising:
- sending a first beacon period information belonging to said first base station from said first base station to said database;
- sending at least a second beacon period information belonging to said second base station from said second base station to said database;
- storing at least said first and second beacon period information on said database;
- sending a request of said second beacon period information from said first base station to said database;
- generating a response of said second beacon period information belonging to said second base station from said database to said first base station;
- forwarding said response of said first base station to said mobile terminal;
- adjusting measurement periods on the mobile terminal based on said response of said beacon period information.

2. A method as in claim 1, wherein said request of said second beacon period information is originated on said mobile terminal.

3. A method as in claim 1, wherein said first base station, said second base station and said database are connected to at least a satellite/ground based timing module for generating a time reference and wherein said method further comprises:
- synchronizing in time said first base station, said second base station and said database to said time reference using said satellite/ground based timing module;
- generating a scheduled measurement period for said mobile terminal by said first base station using said time reference and said second beacon period information,
- sending said scheduled measurement period for said mobile terminal to said mobile terminal from said first base station.

4. A method as in claim 1, wherein said database further comprises a first predefined transmission delay from a first base station to said database and a second predefined transmission delay from a second base station to said database, said database is connected to a satellite/ground based timing module for generating a time reference, said method further comprises:
- reporting in regular intervals a first base station system time to said database from said first base station;
- reporting in regular intervals a second base station system time to said database from said second base station;
- converting said first and second base station system time to said first and second absolute time, using said time reference and said predefined transmission delay by said database;
- generating a scheduled measurement period for said mobile terminal by said first base station at regular intervals;
- sending said scheduled measurement period for said mobile terminal to said mobile terminal from said first base station.

5. A method as in claim 1, wherein said first base station, said second base station, said mobile terminal and said database are coupled to at least a satellite or ground based timing module for generating a time reference, wherein said method further comprises: synchronizing in time said first base station, said second base station, said database and said mobile terminal to said time reference using said satellite/ground based timing module.

6. A mobile terminal, comprising:
- means for requesting a second beacon period information belonging to at least a second base station from a first base station;
- means for receiving a response with said second beacon period information belonging to at least said second base station from said first base station;
- means for adjusting measurement periods on said mobile terminal based on said second beacon period information.

7. A mobile terminal as in claim 6, wherein said mobile terminal further comprises: - means for receiving scheduled measurement period for adjusting measurement periods being generated by said first base station.

8. A base station, comprising:
- means for sending a first beacon period information belonging to a first base station to a database;
- means for sending a request of said second beacon period information from said first base station to said database;
- means for forwarding a response of said second beacon period information belonging to said second base station from said database to said mobile terminal.

9. A base station as in claim 8, wherein said base station further comprises:
- means for receiving a request from a mobile terminal of a second beacon period information belonging to a second base station;
- means for reporting at regular intervals a first base station system time to said database;
- means for generating a scheduled measurement period for said mobile terminal using a second absolute time and said second beacon period information;
- means for sending said scheduled measurement period to said mobile terminal.

10. A database comprising:
- means for receiving a first beacon period information belonging to a first base station from at least a first base station;
- means for storing said first beacon period information from at least said first base station;
- means for receiving at least a second beacon period information belonging to a second base station from a second base station;
- means for storing said second beacon period information from at least said second base station;
- means for receiving a request of at least said second beacon period information from said first base station;
- means for generating a response of at least said second beacon period information if requested by said first base station;
- means for sending said response of at least said second beacon period information to said first base station.

11. A database as claimed in claim 10, wherein said database is coupled to a satellite/ground based timing module for generating a time reference, said database further comprises a first predefined transmission delay from a first base station to said database, and a second predefined transmission delay from a second base station to said database, said database further comprises:
- means for receiving reports in regular intervals from a first base station system time;
- means for receiving reports in regular intervals from a second base station system time;
- means for converting said first and second base station system time to a first and second absolute time, using said time reference and said first and second transmission delay.

## Amended claims

### Amended claims in accordance with Rule 137(2) EPC.

**1.** A method of optimizing measurement duration in a telecommunications network, said telecommunications network comprising a first base station connected to a first radio network, at least a second base station connected to a second radio network, a core network connected to said first and second radio network, a database coupled to said core network, said method comprising:
- sending a first beacon period information belonging to said first base station from said first base station to said database;
- sending at least a second beacon period information belonging to said second base station from said second base station to said database;
- storing at least said first and second beacon period information on said database;
- sending a request of said second beacon period information from said first base station to said database;
- generating a response of said second beacon period information belonging to said second base station from said database to said first base station;
- forwarding said response of said first base station to said mobile terminal;
- adjusting measurement periods on the mobile terminal based on said response of said second beacon period information,
wherein said first and second radio networks use different radio technologies.

**2.** A method as in claim 1, wherein said request of said second beacon period information is originated on said mobile terminal.

**3.** A method as in claim 1, wherein said first base station, said second base station and said database are connected to at least a satellite/ground based timing module for generating a time reference and wherein said method further comprises:
- synchronizing in time said first base station, said second base station and said database to said time reference using said satellite/ground based timing module;
- generating a scheduled measurement period for said mobile terminal by said first base station using said time reference and said second beacon period information,
- sending said scheduled measurement period for said mobile terminal to said mobile terminal from said first base station.

**4.** A method as in claim 1, wherein said database further comprises a first predefined transmission delay from a first base station to said database and a second predefined transmission delay from a second base station to said database, said database is connected to a satellite/ground based timing module for generating a time reference, said method further comprises:
- reporting in regular intervals a first base station system time to said database from said first base station;
- reporting in regular intervals a second base station system time to said database from said second base station;
- converting said first and second base station system time to said first and second absolute time, using said time reference and said predefined transmission delay by said database;
- generating a scheduled measurement period for said mobile terminal by said first base station at regular intervals;
- sending said scheduled measurement period for said mobile terminal to said mobile terminal from said first base station.

**5.** A method as in claim 1, wherein said first base station, said second base station, said mobile terminal and said database are coupled to at least a satellite or ground based timing module for generating a time reference,
wherein said method further comprises: synchronizing in time said first base station, said second base station, said database and said mobile terminal to said time reference using said satellite/ground based timing module.

**6.** A mobile terminal, comprising:
- means for requesting a second beacon period information belonging to at least a second base station from a first base station;
- means for receiving a response with said second beacon period information belonging to at least said second base station from said first base station;
- means for adjusting measurement periods on said mobile terminal based on said second beacon period information,
wherein said first base station belongs to a first radio network and said second base station belongs to a second radio network;
wherein said first and second radio networks use different radio technologies.

**7.** A mobile terminal as in claim 6, wherein said mobile terminal further comprises:
- means for receiving scheduled measurement period for adjusting measurement periods being generated by said first base station.

**8.** A base station, comprising:
- means for sending a first beacon period information belonging to a first base station to a database;
- means for sending a request of said second beacon period information from said first base station to said database;
- means for forwarding a response of said second beacon period information belonging to said second base station from said database to said mobile terminal
wherein said first base station belongs to a first radio network and said second base station belongs to a second radio network;
wherein said first and second radio networks use different radio technologies.

**9.** A base station as in claim 8, wherein said base station further comprises:
- means for receiving a request from a mobile terminal of a second beacon period information belonging to a second base station;
- means for reporting at regular intervals a first base station system time to said database;
- means for generating a scheduled measurement period for said mobile terminal using a second absolute time and said second beacon period information;
- means for sending said scheduled measurement period to said mobile terminal.

**10.** A database comprising:
- means for receiving a first beacon period information belonging to a first base station from at least a first base station;
- means for storing said first beacon period information from at least said first base station;
- means for receiving at least a second beacon period information belonging to a second base station from a second base station;
- means for storing said second beacon period information from at least said second base station;
- means for receiving a request of at least said second beacon period information from said first base station;
- means for generating a response of at least said second beacon period information if requested by said first base station;
- means for sending said response of at least said second beacon period information to said first base station
wherein said first base station belongs to a first radio network and said second base station belongs to a second radio network;
wherein said first and second radio networks use different radio technologies.

**11.** A database as claimed in claim 10, wherein said database is coupled to a satellite/ground based timing module for generating a time reference, said database further comprises a first predefined transmission delay from a first base station to said database, and a second predefined transmission delay from a second base station to said database, said database further comprises:
- means for receiving reports in regular intervals from a first base station system time;
- means for receiving reports in regular intervals from a second base station system time;
- means for converting said first and second base station system time to a first and second absolute time, using said time reference and said first and second transmission delay.
